Europäisches Patentamt

European Patent Office

Office européen des brevets

(19)

(11) **EP 1 279 490 A1**

(12) # EUROPEAN PATENT APPLICATION

(43) Date of publication:
 **29.01.2003 Bulletin 2003/05**

(51) Int Cl.⁷: **B32B 5/22**, B32B 27/12,
 B32B 27/32, B60R 13/02

(21) Application number: **02255264.0**

(22) Date of filing: **23.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Kojima, Akihiko**<br>**Hunabashi-shi, Chiba-ken (JP)** |
| (30) Priority: **25.07.2001 JP 2001223769** | (74) Representative: **Wood, Graham**<br>**Bailey Walsh & Co,**<br>**5 York Place**<br>**Leeds LS1 2SD (GB)** |
| (71) Applicant: **OJI Interpack Co. Ltd.**<br>**Tokyo (JP)** | |

(54) **Automobile interior headliner molding or forming member and automobile interior headliner member using the same**

(57)   This invention is to provide an automobile interior headliner molding or forming member which has high rigidity, being excellent in heat resistance and size stability, and having excellent moldability or formability. An automobile interior headliner molding or forming member is produced using a seven-layer polypropylene foam laminate obtained by stacking, over both sides of a foamed polypropylene sheet, a glass fiber sheet laminate, which has been obtained by laminating a polypropylene sheet with both sides of a glass fiber sheet.

EP 1 279 490 A1

**Description**

1. TITLE OF THE INVENTION

Automobile Interior Headliner Molding or Forming Member and Automobile Interior Headliner Member Using The Same

2. BACKGROUND OF THE INVENTION

FIELD OF THE INVENTION

The present invention relates to an automobile interior headliner member which is a headliner material of an automobile and an automobile interior headliner molding or forming member to be used for the molding or forming of the headliner member and also to a laminate to be molded or formed to conform to a flat or curved shape.

DESCRIPTION OF THE RELATED ART

As a base material conventionally employed for an interior headliner material of an automobile, known are that obtained by adding specific thermosetting fibers to split natural fibers or synthetic fibers to form a predetermined fiber mixture and then applying a uniform pressure to the mixture to form it into a curved face; that obtained by sandwiching a paper corrugated sheet between hot presses, thereby forcibly forming it into a curved face; that obtained by kneading talc or glass in a polypropylene sheet; and a plastic sheet member obtained by adhering a styrene film to a foamed polystyrene sheet.

The molding or forming members obtained by using such base materials in combination involve a problem in molding or forming efficiency or cost, or molded or formed products of them have both merits and demerits in heat resistance, moisture resistance and size stability. They therefore need improvement now. For example, as an automobile headliner material using glass fibers, a molding or forming headliner base material obtained by stacking a surface layer containing long glass fibers over a resin film foamed sheet is applied for patent (Japanese Patent Laid-Open No. Hei 7-68689) but it is not always sufficient in lamination ease.

A molding or forming material made of, in order to aim at weight reduction, a foamed polypropylene as a principal constituent and has a filler-containing polypropylene sheet in combination has improved rigidity and heat resistance. In spite of the request for the improvement of its size accuracy which is necessary upon use as an interior headliner material, however, shrinkage after molding or forming has not yet been overcome and size stability at high temperatures is not sufficient. It is necessary to improve these performances further. For example, in Japanese Patent Laid-Open No. 2000-117908, disclosed is a laminate obtained by adhering a mica-containing propylene sheet with a foamed polypropylene sheet. The resulting laminate is however not sufficient in size stability at high temperatures. A shrinkage percentage of the member as measured by a testing method which will be described later is about 0.15%.

Upon production of an industrial material for automobiles or light electric appliances, a method of mixing an inorganic material such as mica or talc in a polypropylene resin in order to improve its rigidity and heat resistance is well known. In the case where a thin plastic sheet obtained by extruding a kneaded mixture of a polypropylene resin and a filler (mica or the like) is laminated with foamed polypropylene, however, the kneaded resin of polypropylene and filler (mica or the like)involvesadrawbackinfilmformingpropertiesbyextrusion, particularly, in formation of a broad and thin film. Such a drawback in film formation adversely affects the production speed, that is, productivity.

3. SUMMARY OF THE INVENTION

Accordingly, an object of the present invention is to provide an automobile interior headliner molding or forming member which has a thermoplastic resin foamed sheet as a principal constituent and has a thermoplastic resin sheet used in combination therewith; is equipped with the properties so far required for it such as rigidity, lightness in weight, heat resistance and formability upon pressing; at the same time, is excellent in size stability suchas shrinkage percentage of the molded or formed product; and is moreover, excellent in lamination ease and film forming properties upon production; and an automobile interior headliner member using it.

The inventors of the present application have found a constitution wherein a glass fiber sheet laminated, on both sides thereof, with a polypropylene sheet is adhered to the both sides of a foamed polypropylene sheet, and completed the present invention.

With a view to overcoming the above-described problems, the below-described constitutions are embraced in the present invention.

In a first aspect of the present invention, there is thus provided an automobile interior headliner molding or forming member having a seven-layerpoly propylene foamlaminate formed by laminating a foamed polypropylene sheet, on both sides thereof, with a glass fiber sheet laminate having a glass fiber sheet laminated, on both sides thereof, with a polypropylene sheet. The present invention has a first characteristic in this structure having novel combination of seven layers. Described specifically, a glass fiber sheet is used in combination with a foamed polypropylene sheet to attain size stability or the like. Simultaneously, warpage which otherwise occurs owing to a difference in elongation ratio between materials is suppressed by constituting layers substantially symmetrically in a thickness direction with the foamed polypropylene sheet as a center of the laminate; and lamination performance is improved by frequent use of a polypropylene sheet which is similar in material quality to the foamed polypropylene sheet and permits easy lamination.

As the foamed polypropylene sheet in the first aspect of the invention, an atmospherically foamed and crosslinked polypropylene sheet is preferably employed.

As the glass fiber sheet in the present invention, a glass fiber mat or glass fiber paper can be employed. As the glass fibers, ordinarily employed ones having a fiber diameter of 5 to 20 μm and fiber length of 1 to 100 mm are usable.

In a second aspect of the present invention, there is thus provided an automobile interior headliner molding or forming material as described in the first aspect of the invention, wherein the foamed polypropylene sheet constituting the seven-layer polypropylene foam laminate has an expansion ratio of 5 to 50 times and a thickness of 2 to 6 mm, the glass fiber sheet is composed mainly of glass fibers and has a mass per unit area of 20 to 150 g/m$^2$, and the polypropylene sheet laminated with the glass fiber sheet on both sides thereof has a thickness of 20 to 300 μm.

In a third aspect of the present invention, there is also provided an automobile interior headliner molding or forming member as described in the first or second aspect of the invention, wherein the glass fiber sheet contains 90 to 30 % by mass of glass fibers and 10 to 70 % by mass of olefin resin fibers such as polypropylene fibers.

As the olefin resin fibers such as polypropylene fibers, those having a fiber diameter of 10 μm to 1 mm and fiber length of 1 mm to 20 mm are preferred.

In a fourth aspect of the present invention, there is also provided an automobile interior headliner molding or forming member as described in any one of the first to third aspects of the invention, wherein the polypropylene sheet laminated with the glass fiber sheet on both sides thereof has a melt flow rate of 3 to 40 g/10 min as measured at a testing temperature of 230°C under a test load of 21.18N, and contains a filler such as mica or talc in an amount of 5 to 10 % by mass.

In a fifth aspect of the present invention, there is also provided an automobile interior headliner molding or forming member as described in any one of the first to fourth aspects of the invention, wherein a back treating material is adhered to the back side of the seven-layer polypropylene foam laminate.

In a sixth aspect of the present invention, there is also provided an automobile interior headliner molding or forming member as described in the fifth aspect of the invention, wherein the back treating material is a nonwoven fabric composed mainly of polyester fibers.

In a seventh aspect of the present invention, there is also provided an automobile interior headliner member obtained bymoldingorformingofanautomobileinteriorheadlinermolding or forming member as described in any one of the first to sixth aspects of the invention.

In an eighth aspect of the present invention, there is also provided an automobile interior headliner member as described in the seventh aspect of the invention, wherein the seven-layer polypropylene foam laminate has a reinforced portion formed by partially laminating a glass fiber sheet, which has been laminated, on the side of the back treating material, with a polypropylene sheet, with the outer surface of the back treating material adhered to the back side of the polypropylene foam laminate.

In a ninth aspect of the present invention, there is also provided an automobile interior headliner member as described in the eighth aspect of the invention, wherein the glass fiber sheet and polypropylene sheet laminated with the outer surface of the back treating material on the back side of the seven-layer polypropylene foam laminate have been formed of the same materials as those used for the glass fiber sheet laminate constituting the seven-layer polypropylene foam laminate.

In a tenth aspect of the present invention, there is also provided an automobile interior headliner molding or forming member as described in any one of the first to sixth aspects of the invention, wherein an absolute shrinkage percentage, which will be defined later, of the automobile interior headliner molding or forming member is 0.05% or less .

This shrinkage percentage will become an evaluation standard of size stability of the member aftermolding or forming. The shrinkage percentage adjusted to 0.05% or less is preferred in view of size stability. The invention product reveals the possibility of attaining such a value.

This shrinkage percentage is a value specified in the longitudinal direction of a member as described in more detail in the section <Measurement of Shrinkage Percentage>.

In an eleventh aspect of the present invention, there is also provided an automobile interior headliner member as described in any one of the seventh to ninth aspects of the invention, wherein an absolute shrinkage percentage, which will be defined later, of the automobile interior headliner member is 0.05% or less.

This shrinkage percentage is specified, as described later in the section of <Shrinkage Percentage>, as a value in the longitudinal direction of the member. Since there is almost no difference in a shrinkage percentage between an automobile interior headliner molding or forming member and an automobile interior headliner member obtained by molding or forming of it, they are specified similarly.

4. BRIEF DESCRIPTION OF THE DRAWINGS

FIG. 1 is a diagram illustrating a layer constitution of the automobile interior headliner member in Examples 1, 2 and 3 of the present invention.

FIG. 2 is a diagram illustrating a layer constitution of the automobile interior headliner member in Example 4 of the present invention.

FIG. 3 is a perspective view illustrating the automobile interior headliner molding or forming member in Examples 1, 2 and 3 of the invention.

FIG. 4 is a perspective view illustrating an automobile interior headliner molding or forming member in Example 4 of the present invention.

FIG. 5 is a diagram illustrating the fabrication step of an eight-layer polypropylene foam laminate.

5. DESCRIPTION OF THE PREFERRED EMBODIMENT(S)

The automobile interior headliner molding or forming member and the automobile interior headliner member obtained by molding or forming the former member into the shape of an automobile interior headliner, each according to the present invention, has, as a main constituent, a seven-layer polypropylene foam laminate obtained by laminating, on both sides of a foamed polypropylene sheet, a glass fiber sheet laminate having a glass fiber sheet laminated, on both side thereof, with a polypropylene sheet.

The term "polypropylene sheet" as used herein has the same meaning as a polypropylene resin sheet or polypropylene film.

The foamed polypropylene sheet which exists at the center of this seven-layer polypropylene foam laminate and constituting the laminate in combination with a polypropylene resin is preferably an atmospherically foamed polypropylene sheet prepared by atmospheric crosslinking and foaming. The atmospheric crosslinking and foaming is a method of obtaining a foamed body by blending a resin and a thermal decomposition type foaming agent with a crosslinking agent or crosslinking assistant, extruding the mixture into a foamable sheet and then crosslinking and foaming it by exposure to electron beams; or a method of extruding the mixture, and carrying out .crosslinking prior to foaming and then foaming (chemical crosslinking method).

When the expansion ratio does not exceed several times or the like, the sheet has rigidity. When the expansion ratio increases to several tens times, on the other hand, the sheet exhibits properties as a soft and flexible film. In the present invention, the expansion ratio and thickness are set at 5 to 50 times and 2 to 6 mm, respectively in order to satisfy both the rigidity and weight reduction.

The structure of a laminate is determined by rigidity, stretchability and lightness in weight which the laminate structure is usually required to have. In the present invention, an automobile interior headliner molding or forming member obtained using a foamed polypropylene sheet having 2 to 6 mm thickness is supposed as a preferred example. The seven-layer polypropylene foam laminate constituting the main portion of the automobile interior headliner molding or forming material has, as described above, a seven-layer structure having a foamed polypropylene sheet sandwiched therein, more specifically, it has a polypropylene sheet/glass fiber sheet/polypropylene sheet/foamed polypropylene sheet/polypropylene sheet/glass fiber sheet/polypropylene sheet. This seven-layer structure has, to the back side thereof, a back treating material adhered as desired for preventing rustle due to vibration. As the back treating material, a polyesternon woven fabricis preferred. In this case, the polypropylene foam laminate has an eight - layer structure.

The thickness of such a laminate is determined by the target rigidity and weight reduction. The seven-layer polypropylene foam laminate according to the present invention is preferably set to have a whole thickness of about 2.3 mm to 7.4 mm. The maximum flexural load (as measured in accordance with the testing method described later) of the seven-layer polypropylene foam laminate is desired to be set at about 10 to 50N when performances required for automobile interior headliner materials are taken into consideration. In the invention, the thickness of each member of the laminate is determined after consideration of such a load. At a thickness less than 2 .3 mm, rigidity determined by the maximum flexural load becomes less than 10N, which tends to lower the working efficiency upon attachment of the automobile interior head liner member. Even if the thickness and maximum flexural load exceed 7.4 mm and 50N, respectively, no particular improvement is recognized. Upon calculation of the thickness, the glass fiber sheet is adjusted to have a thickness of about 0.1 mm.

The term "maximum flexural load" as used here in originally means a value required for an automobile interior headliner member which has finished its molding or forming. When an automobile interior headliner member is obtained by molding or forming the seven-layer polypropylene foam laminate without any special treatment on it for improving its strength, as in the case where a nonwoven fabric of a polyester fiber is attached as the back treating material, however, the maximum flexural load can be specified as that required for the seven-layer polypropylene foam laminate prior to molding or forming. In this invention, therefore, the maximum flexural load is specified based on such assumption.

The seven-layer polypropylene foam laminate, and the eight-layer polypropylene foam laminate having, in addition to the seven-layer laminate, a back treating material, each according to the present invention can usually be produced as described below. The following is one example of a production process of the eight-layer polypropylene foam laminate. (1) While a glass fiber sheet, in the wind-up roll form, prepared in advance is unwound, a polypropylene resin is extruded in a molten state from the T die of an extruder. The extrudate is thus stacked over the glass fiber sheet, whereby a two-layer laminate of polypropylene sheet/glass fiber sheet is produced. It is wound up. (2) A glass fiber sheet in the wind-up roll form and a nonwoven fabric which is composed mainly of polyester fibers and is in the wind-up rolled form are prepared in advance . A polypropylene resin is extruded in a molten state from the T die of an extruder while these rolls are unwound individually. The extrudate is sandwiched between these unwound glass fiber sheet and nonwoven fabric. After lamination, the resulting three-layer laminate of glass fiber sheet/polypropylene sheet/ nonwoven fabric is wound up.

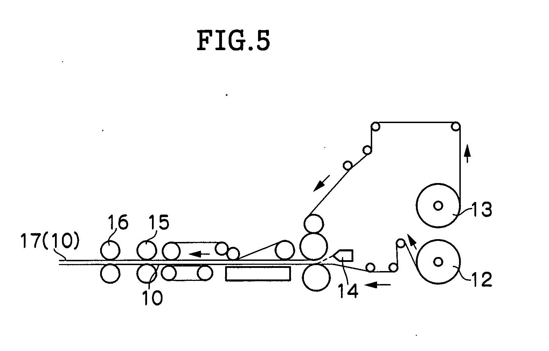

(3) A foamed polypropylene sheet in the wind-up roll form and the three-layer laminate roll obtained in (2) are prepared in advance. While these rolls are unwound individually, a polypropylene resin is extruded in a molten state from the T die of an extruder and it is inserted between the foamed polypropylene sheet and three-layer laminate which are just unwounded. They are laminated, whereby a five-layer laminate made of foamed polypropylene sheet/polypropylene sheet/glass fiber sheet/polypropylene sheet/nonwoven fabric is obtained. Then, the laminate is wound up. (4) The two-layer laminate roll 13 obtained in (1) and five-layer laminate roll 12 obtained in (3) are prepared in advance. In a manner as illustrated in FIG. 5, an eight-layer polypropylene foam laminate 10 is produced. Described specifically, while these rolls are unwound individually, a polypropylene resin is extruded in a molten state from the T die 14 of an extruder and it is inserted between the unwound two-layer laminate and five-layer laminate. They are laminated, whereby an eight-layer laminate 10 made of polypropylene sheet/glass fiber sheet/polypropylene sheet/foamed polypropylene sheet/polypropylene sheet/glass fiber sheet/polypropylene sheet/nonwoven fabric is obtained. This eight-layer laminate is, after production, cut into an appropriate size by using a slitter 15 and cutter 16 into an automobile interior headliner molding or forming member 17. It is to be noted that the production process is not limited by the present invention.

The seven-layer polypropylene foam laminate can be prepared in a similar manner except that in the step (2), a nonwoven-fabric-free two-layer laminate, that is, a laminate of glass fiber sheet/polypropylene sheet is produced and wound up. The above-described production procedure is only one example. It is needless to say that the order can be changed, or plural steps are combined into one step by integration of some apparatuses, thereby eliminating or reducing the wind-up work of an intermediate product.

The eight-layer polypropylene foam laminate has, on the surface side (automobile ceiling on the room side) thereof, a cladding surface material layer formed further. Formation of the cladding surface material layer simultaneously with the molding or forming of the automobile interior headliner molding or forming member in to an automobile ceiling is efficient. It can be formed by putting an eight-layer polypropylene foam laminate with no cladding surface material layer formed thereon in a heating oven, preheating it until the surface temperature of the polypropylene resin layer on which the cladding surface material is to be laid over to 170°C or greater, transferring the thus heated laminate to a cooling mold rightly after preheating, performing contact bonding of it under pressure with the cladding surface material disposed thereon, and pressure molding it for about 30 to 50 seconds. Examples of the cladding surface material include nonwoven fabrics made of polyester, tricot skin, leather and synthetic leather.

The glass fiber sheet constituting the seven-layer polypropylene foam laminate serves to improve size stability of the molded or formed product. It also has effects for improving heat resistance and rigidity. In the seven-layer laminate of the present invention, lamination of the glass fiber sheet and the like under predetermined conditions make it possible to suppress an absolute elongation ratio, which will be described later, to 0.05% or less. Examples of the glass fiber sheet usable in the invention include glass fiber foam prepared by dry process, that is, by depositing glass fibers in a dry state, and glass fiber paper made by wet process, that is, by spraying a mixture of glass fiber raw materials with water, thereby preparing it in a substantially similar manner to that employed for paper. The glass fiber sheet has, as a main component, glass fibers having a fiber diameter of 5 to 20 $\mu$m and fiber length of 1 to 100 mm. The mass (basis weight) per unit area is preferably adjusted to 20 to 150 g/m$^2$. It is practical to use glass fiber paper when the mass per unit area is about 20 to 50 g/m$^2$ and glass fiber foam when the mass per unit area is around 100 g/m$^2$ or greater. The mass per unit area less than 20 g/m$^2$ is not preferred because at such a small mass per unit area, glass fiber paper cannot be made easily and in addition, size stability after molding or forming of an automobile interior headliner member tends to be insufficient. The mass per unit area exceeding 150 g/m$^2$ is also not preferred because it increases both the production unit cost and the weight of the glass fiber sheet.

In this glass fiber sheet, 0 to 70% by mass of an olefin resin fiber (fiber diameter: 10 µm to 1 mm, fiber length: 1 mm to 20 mm) such as polypropylene resin fiber can be incorporated in order to improve moldability or formability. The preferred amount of the olefin resin is 10 to 70% by mass. Amounts exceeding 70% by mass are not preferred because a proportion of the glass fibers declines, resulting in excessive lowering in the effects of the glass fibers. At amounts less than 10% by mass, on the other hand, effects for improving moldability or formability can hardly be expected.

In the glass fiber sheet laminate (polypropylene sheet/glass fiber sheet/polypropylene sheet) which is stacked on both sides of the foamed polypropylene sheet, the constitution of the glass fiber sheet and polypropylene sheet to be laminated with the glass fiber sheet on both sides thereof and conditions such as melt flow rate (MFR) must be determined after due consideration of the moldability or formability such as film forming property.

In the present invention, investigated were proper conditions of the polypropylene resin permitting extrusion and lamination at a T die width as wide as about 1500 mm, production speed of 30 to 60 m/min and a thickness of 30 to 100 µm as mass production conditions of a laminate of the glass fiber sheet with the polypropylene resin by a production machine.

The present inventors have proceeded with an investigation on the relationship between the tension upon lamination of a polypropylene resin with a glass fiber mat or glass fiber paper and melt flow rate (MFR) of polypropylene, and, as a result, found proper conditions which can satisfy the above-described extruding conditions from a T die.

It has been confirmed that when a polypropylene resin has a melt flow rate (MFR, in accordance with Method B of JIS K 7210), as measured at a test temperature of 230°C under a test load of 21.18N, of 3 to 40 g/10 min, extrusion and lamination can be conducted at a laminate thickness of 20 to 300 µm. The melt flow rate is preferably 8 to 15 g/ 10 minutes.

It has also been confirmed that when even a propylene resin having 5 to 10 wt.% of a filler (mica or the like) kneaded therein in order to improve heat resistance and rigidity has a melt flow rate (in accordance with Method B of JIS K 7210), at a testing temperature of 230°C under a test load of 21.18N, of 3 to 10 g/10 min, extrusion and lamination can be conducted at a laminate thickness of 20 to 300 µm. The melt flow rate is preferably 8 to 15 g/10 min. The melt flow rate less than 3 g/10 min is not preferred, because the film tends to be perforated owing to poor spreadability. When it exceeds 40 g/10 min, on the other hand, the resin becomes too soft so that it is not preferred.

In the present invention, a polypropylene resin is used for a polypropylene sheet which laminates the above-described foamed polypropylene sheet with glass fiber sheet (glass fiber mat or glass fiber paper). A polyolefin resin other than polypropylene is also usable insofar as it exhibits similar or analogous effects in moldability or formability. For the purpose of improving heat resistance and rigidity, a filler such as mica or talc may be kneaded with the resin in an amount of 5 to 10 wt.%.

In the present invention, the eight-layer polypropylene foam laminate can be reinforced partially at a strength improvement requiring portion thereof by temporarily attaching a glass fiber sheet (glass fiber mat or glass fiber paper), which has been laminated, on one side thereof, to a polyolefin resin such as polypropylene resin and has been cut into a proper size, to the corresponding portion of the nonwoven-fabric surface of the back treating material with a tape. When the performance of the automobile ceiling is taken into consideration, the portion to be reinforced is generally the outer edge of the polypropylene foam and from the viewpoints of efficient reinforcement and efficient production, the number of the reinforced portions is preferably 4 at the maximum. For example, in the case where the automobile interior headliner member of a substantially rectangular shape is reinforced along four sides, the automobile interior headliner member is reinforced at both edge portions along it slengthwise direction.

The glass fiber sheet, which has been laminated, on one side thereof, with a polypropylene resin sheet and partially laminated with the automobile interior ceiling molding or forming member, is molten and fusion bonded upon preliminary molding or forming in the above-described heating oven and then, partially laminated with the side of the back treating material (side of nonwoven fabric) by applying pressure immediately after fusion bonding. Since the partial reinforcement is conducted at a side opposite to the side on which a cladding surface material is to be adhered, it can improve the strength partially without causing any problem in appearance.

In the glass fiber sheet (glass fiber mat or grass fiber paper) for partial lamination which has been laminated, on one side thereof, with a polypropylene sheet and cut into a proper size, 0 to 70% by mass of olefin resin fibers such as polypropylene fibers (fiber diameter of 10 µm to 1 mm, fiber length of 1 mm to 20 mm) may be mixed in order to improve moldability or formability, as in the case of the glass fibers constituting the seven-layer polypropylene foam laminate. The amount of the fibers is preferably 10 to 70% by mass.

In the polypropylene sheet for partial lamination which has been laminated with one side of the glass fiber sheet (glass fiber mat or glass fiber paper), a filler (mica, talc or the like) may be kneaded in an amount of 5 to 10 wt. % in order to improve heat resistance and rigidity.

Use of the same materials as those used for the glass fiber sheet laminate (polypropylene sheet/glass fiber sheet/polypropylene sheet) constituting the seven-layer polypropylene foam laminate for the glass fiber sheet and polypropylene sheet which are partially laminated reinforcing members is preferred, because it enables efficient production.

The width of the partially laminated part with the glass fiber sheet (glass fiber mat or glass fiber paper), which has been laminated on one side thereof with a polypropylene sheet and cut into a proper size, is preferably 50 to 300 mm from the viewpoints of the cost and productivity. When it is too narrow, sufficient reinforcing effects are not exhibited. Too wide width, on the other hand, is not preferred in view of weight reduction and cost.

[Examples]

A description will next be made of Examples. The numerical values relating to mixing or concentration are volume-based values of the solid content or effective ingredient.

<Measurement of Shrinkage Percentage>

Automobile interior headliner molding or forming materials were prepared in a manner as described in the below-described Examples, respectively. After forming each of the laminate samples of about 300 mm square, which had been obtained from the thus-prepared members, under pressure into a flat shape (in other words, after forming into an automobile interior headliner members), it was allowed to stand in an atmosphere of 20°C and 65%RH for 48 hours. On one side of the sample, marks were made at intervals of about 200 mm and the initial distance between two adjacent marks was measured. The sample was then put into a hot air drier set at 90°C. After lapse of 8 hours, the distance of the sample just taken out from the drier was measured. The change ratio from the initial distance was calculated. When the sample showed elongation, it was indicated by (+), while when the sample showed shrinkage, it was indicated by (-).

In the automobile interior headliner members of the present invention, there is a little difference between a shrinkage percentage in the longitudinal direction (in the flow direction of a resin molder and length-wise direction of the automobile interior headliner material) and that in the crosswise direction (a direction perpendicular to the longitudinal direction). The member is longer in the longitudinal direction, which means that the absolute value of the shrinkage percentage becomes larger in this direction. In this Example, the shrinkage percentage in the longitudinal direction was measured.

<Measurement of Maximum Flexural Load and Flexural Modulus Gradient>

A laminate molded or formed in a similar manner to that employed for the above-described measurement was cut into a test piece of 50 mm × 150 mm. With the surface side down, a load was applied at a rate of 50 mm/min to the center of the test piece having a span length of 100 mm freely supported at both ends and a line showing the relationship between the load and distortion was obtained. The load upon rupture of the material was designated as the maximum flexural load. From the distortion amount and flexural load on a straight line of the measurement chart line in the initial stage of pressurization, a flexural load per mm of the distortion amount was calculated, which was designated as a flexural modulus gradient.

In the automobile interior headliner members of the present invention, there is a little difference between each of the maximum flexural load and flexural modulus gradient in the longitudinal direction (in the flow direction of a resin molder and length-wise direction of the automobile interior headliner material) and that in the crosswise direction (a direction perpendicular to the longitudinal direction) . The member is longer in the longitudinal direction, which means that a greater flexural load is applied to this direction. In this Example, therefore, they were measured in the longitudinal direction.

<Measurement of Heat-Resistant Cantilever Gravity Drawdown>

A laminate molded or formed in a similar manner to that employed for the above-described measurement was cut into a test piece of 50 mm × 250 mm. With the surface side down, the test piece was set (set with one-side rigidly supported) at a grip margin of 50 mm and span length of 200 mm. It was allowed to stand for 4 hours under the circumstance of 90°C and the initial value at the end of the test piece and a change in deflection after the test piece was allowed to stand under the test circumstance were measured.

In the automobile interior headliner members of the present invention, there is a little difference between a heat-resistant cantilever gravity drawdown in the longitudinal direction (in the flow direction of a resin molder and length-wise direction of the automobile interior headliner material) and that in the crosswise direction (a direction perpendicular to the longitudinal direction). The member is longer in the longitudinal direction, which means that the absolute value of the deflection becomes larger in this direction. In this Example, the deflection in the longitudinal direction was measured.

<Measurement of linear expansion ratio>

A laminate molded or formed in a similar manner to the above-described measurement was cut into a flat test piece of 350 mm × 300 mm. It was the allowed to stand at room temperature for 24 hours.

It was then put into a thermohygrostat and was allowed to stand at 85°C for 24 hours. It was then allowed to stand further at room temperature for 24 hours.

The test sample was marked with two straight lines in parallel in the crosswise direction (widthwise direction of the automobile interior headliner molding or forming member) . The distance between these lines was set at 300 mm.

The test sample was put into the thermohygrostat and was allowed to stand at 80°C for 6 hours. After it was allowed to stand for 6 hours, the test sample was taken out from the thermohygrostat and immediately after that, the length between lines marked with a distance of 300 mm in the widthwise direction was measured using a magnifier. In other words, the measurement was conducted in the longitudinal direction (the size of the automobile interior headliner molding or forming material in the lengthwise direction was measured).

The test sample thus measured was put into the thermohygrostat and was allowed to stand for 6 hours at 0°C. After it was allowed to stand for 6 hours, the test sample was taken out and immediately, the length between two lines marked with a distance of 300 mm in the widthwise direction was measured using a magnifier. In other words, the measurement was conducted in the longitudinal direction (the size of the automobile interior headliner molding or forming material in the lengthwise direction was measured). The reason of the measurement in the longitudinal direction is as described above in the section of the shrinkage percentage.

The measured data are inserted in the following equation and a linear expansion coefficient is calculated.

$$\text{Linear expansion coefficient} = \{(\text{Data after 6 hours at } 80°C)$$

$$- (\text{Data after 6 hours at } 0°C)\} \div \{(\text{Data after 6 hours at } 0°C)\} \times (80\text{-}0)\}. \text{ Its unit is } 1/°C.$$

<Example 1>

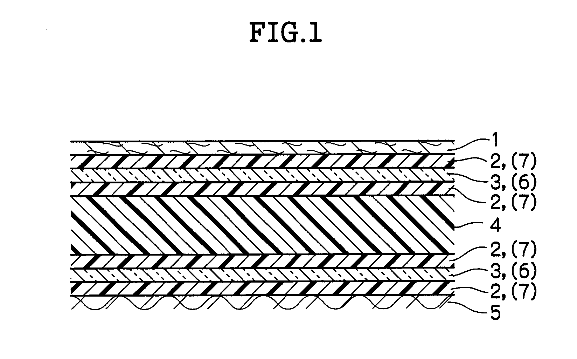

Examples will next be described using FIG. 1.

From a T die having an extrusion width of 1500 mm, pellets of a polypropylene resin having a melt flow rate (in accordance with Method B of JIS-K-7210) of 25 g/10 min as measured at a testing temperature of 230°C under a test load of 21.18 N were melt extruded as Polypropylene resin 2 to give a thickness of 30 μm. The resulting extrudate was continuously laminated with Glass fiber mat 3 fed at a rate of 40 m/min and having a mass of 100 g/m$^2$ and, as a back treating material, Polyester nonwoven fabric 5 having a weight of 15 g/m$^2$, whereby a three-layer laminate (Glass fiber mat 3/Polypropylene resin 2/Polyetster nonwoven fabric 5) was obtained. From a T die having an extrusion width of 1500 mm, similar polypropylene resin pellets were melt extruded as Polypropylene resin 2 to give a thickness of 30 μm and the extrudate was laminated continuously with 100 g/m$^2$ of Glass fiber mat 3 fed at a rate of 40 m/min, whereby a two-layer laminate (Polypropylene resin sheet 2/Glass fiber mat 3) was obtained. The similar polypropylene resin pellets were melt extruded as Polypropylene resin sheet 2 to give a thickness of 30 μm and the resulting extrudate was laminated continuously with Atmospherically foamed and crosslinked polypropylene sheet 4, having a thickness of 3 mm and an expansion rate of 25, fed at a rate of 40 m/min and the above-described three-layer laminate, whereby a five-layer composite material (Atmospherically foamed and crosslinked polypropylene sheet 4/Polypropylene resin sheet 2/Glass fiber mat 3/Polypropylene resin sheet 2/Polyester nonwoven fabric 5) was obtained.

In the final step, similar polypropylene resin pellets were melt extruded as Polypropylene resin sheet 2 to give a thickness of 30 μm and the resulting extrudate was laminated continuously with the above-described two-layer laminate (Polypropylene resin sheet 2/Glass fiber mat 3) and the five-layer laminate (Atmospherically foamed and crosslinked polypropylene sheet 4/Polypropylene resin sheet 2/Glass fiber mat 3/Polypropylene resin sheet 2/Polyester nonwoven fabric 5), each fed at a rate of 40 m/min, whereby as an eight-layer laminate (eight-layer polypropylene foam laminate), (Polypropylene resin sheet 2/Glass fiber mat 3/Polypropylene resin sheet 2/Atmospherically foamed and crosslinked polypropylene sheet 4/Polypropylene resin sheet 2/Glass fiber mat 3/Polypropylene resin sheet 2/Polyester nonwoven fabric 5) was obtained.

The resulting laminate was cut into a size appropriate for an automobile ceiling, whereby an automobile interior headliner molding or forming member 17 was obtained. Then, amember (a laminate sample of about 300 mm square) corresponding to an automobile interior headliner member was obtained by preheating the laminate thus obtained (an automobile interior headliner molding or forming member) in a heating oven, laying Cladding surface material 1 made of a polyester nonwoven fabric over the polypropylene resin sheet on the side opposite to the polyester nonwoven fabric serving as the back treating material and then, pressing them in a cooling mold.

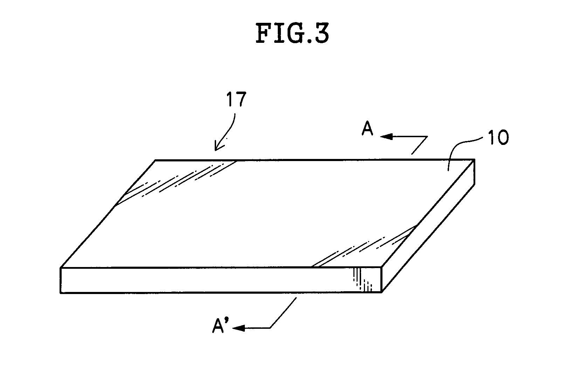

FIG. 3 is a perspective view illustrating the automobile interior headliner molding or forming member in this example, while FIG. 1 is a view illustrating the layer constitution of the automobile interior headliner member (sample) which has finished its molding or forming. FIG. 1 is a diagram illustrating the layer constitution corresponding to the A-A' cross-section in FIG. 3. In the automobile interior headliner molding or forming member, the lengthwise direction is a resin extruding direction and also the front to rear direction of the automobile.

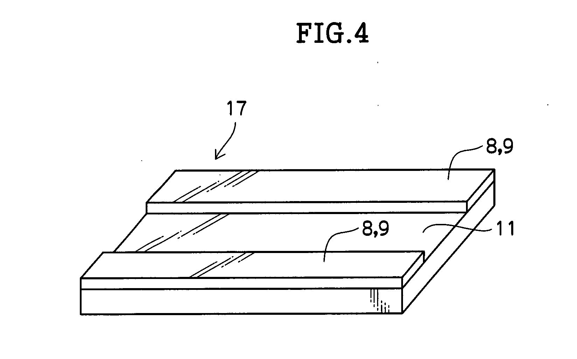

FIGS. 1 to 3 are all illustrated with the indoor side (surface side) of the automobile headliner up. It is to be noted, however, that FIG. 4 is illustrated with the panel side (back side) of the automobile headliner up for facilitating understanding of the reinforced part.

<Example 2>

Under similar conditions to Example 1 except that with regards to all the glass fiber mat layers of the eight layers of the eight-layer polypropylene foam laminate, the glass fiber mat made of 100% glass fibers was replaced with a glass fiber mat having 10% by mass of polypropylene resin fibers (fiber diameter: 20 μm, fiber length: 20 mm) mixed therein in order to improve moldability or formability, an automobile interior headliner molding or forming member was obtained. This laminate (automobile interior headliner molding or forming member) was preheated in a heating oven. Then, Cladding surface material 1 made of a polyester nonwoven fabric was stacked over the polypropylene resin sheet on the side opposite to the nonwoven fabric, followed by pressing in a cooling mold, whereby a member (a laminate sample of about 300 mm square) corresponding to an automobile interior headliner member was obtained.

FIG. 3 is a perspective view of the automobile interior headliner molding or forming member of this Example, while FIG. 1 illustrates the layer constitution of the automobile interior headliner member (sample) which has finished its molding or forming. Of the symbols in (), only symbol (6) can be applied. FIG. 1 is a diagram illustrating the layer constitution corresponding to the A-A' cross-section of FIG. 3.

<Example 3>

In a similar manner to Example 1 except that with regards to all the polypropylene resin sheet layers of the eight-layer polypropylene foam laminate, a resin obtained by kneading 5 wt.% of mica in a polypropylene resin was used, an automobile interior headliner molding or forming member was obtained. This laminate (automobile interior headliner molding or forming member) was preheated in a heating oven. Then, Cladding surface material 1 made of a polyester nonwoven fabric was stacked over the polypropylene film layer on the side opposite to the nonwoven fabric layer serving as the back treating material, followed by pressing in a cooling mold, whereby a member (a laminate sample of about 300 mm square) corresponding to an automobile interior headliner member was obtained.

FIG. 3 is a perspective view illustrating an automobile interior headliner molding or forming member of the present example, while FIG. 1 illustrates the layer constitution of the automobile interior headliner member (sample) which has finished its molding or forming. Of the symbols in (), only a symbol (7) is applied.

<Example 4>

In a similar manner to Example 1 except that on the side of Polyester nonwoven fabric (back treating material) 5 of the eight-layer polypropylene foam laminate, a member which had been obtained in advance by laminating Glass fiber mat 9 with Polypropylene resin sheet 8 of 30 μm thick and then cut into a proper size (300 mm width) was temporarily attached by using a stapler and partially laminated, an automobile interior headliner molding or forming member was obtained. Then, the laminate thus obtained (automobile interiorheadliner molding or forming member) was preheated in a heating oven. Cladding surface material 1 made of a polyester nonwoven fabric was then laid over the polypropylene resin sheet on the side opposite to the polyester nonwoven fabric serving as the back treating material. It was pressed in a cooling mold, whereby from the thus obtained material having a reinforced portion, amember (alaminate sample of about 300 mm square) corresponding to an automobile interior headliner member was obtained.

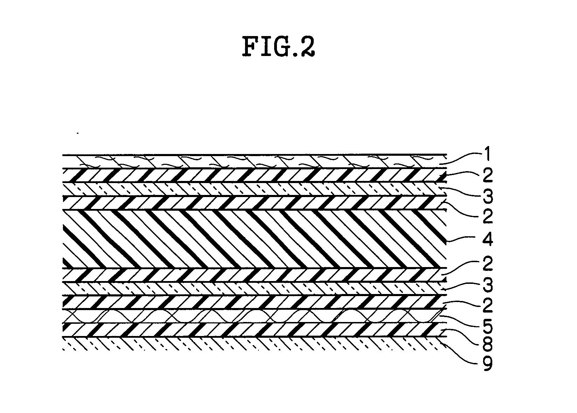

FIG. 4 is a perspective view illustrating an automobile interior headliner molding or forming member in this example, while FIG. 1 is a view illustrating the layer constitution of the automobile interior headliner member (sample) including the reinforced portion, which member has finished its molding or forming. It is to be noted that FIG. 2 is illustrated with the indoor side (surface side) of the automobile headliner up, but FIG. 4 is illustrated with the panel side (back side) of the automobile ceiling up for facilitating understanding of the reinforced part.

An example of the automobile interior headliner member using a mica-containing polypropylene sheet, which has been applied for patent by the present company in Japanese Patent Application No. 200-385429, will next be described as Comparative Example.

<Comparative Example 1>

Phlogopite-containing pellets were obtained by kneading, under a molten state, pellets of a polypropylene resin having a melt flow rate (in accordance with Method B of JIS-K-7210) of 25 g/10 min as measured at a testing temperature of 230°C under a test load of 21.18 N with 20 wt.% of phlogopite having a particle size of 40 µm and an aspect ratio of 10 and 0.1 wt. % of a silane coupling agent. From a T die having an extrusion width of 1500 mm, by using the resulting pellets, Phlogopite-containing polypropylene resin 2 was melt extruded to give a thickness of 150 µm. The resulting resin was continuously stacked over an atmospherically foamed and crosslinked polypropylene sheet - having a thickness of 3 mm and an expansion ratio of 25 - which had been delivered at a rate of 28 m/min, whereby a two-layer plastic sheet complex was obtained. While delivering the two-layer plastic sheet complex, Phlogopite-containing polypropylene resin 4 was extruded from a T die having an extrusion width of 1500 mm to give a thickness of 150 µm and laminated with the back side of Atmospherically foamed and crosslinked polypropylene sheet 3 at 28 m/min. At the same time, 15 g/m$^2$ of a polyester spun bond nonwoven fabric was laminated, as Back treating material 5, with Phlogopite-containing polypropylene resin 4 on the other side thereof, where by a laminate of thethree-layerplastic sheet complex + back treating material was obtained.

The resulting laminate was cut into a size appropriate for an automobile ceiling, whereby a member for forming or molding an automobile interior ceiling was obtained. Then, a member (a laminate sample of about 300 mm square) corresponding to an automobile interior ceiling member was obtained by preheating the resulting laminate thus obtained (member for forming or molding an automobile interior ceiling) in an oven, laying Cladding surface material 1 made of a polyester nonwoven fabric over the side of Phlogopite-containing polypropylene sheet 2 on which no back treating material has been stacked and then, pressing them in a cooling mold.

The automobile interior headliner molding or forming member in this example has a substantially same shape as illustrated in the perspective view of FIG. 3. The lengthwise direction is a resin extruding direction and also the front to rear direction of the automobile.

<Comparative Example 2>

Under similar conditions to Comparative Example 1 except thatamica-containing polypropylene sheet (obtained by molding or forming of the phlogopite-containing polypropylene resin as described in Comparative Example 1) of 150 µm in thickness and 300 mm in width was partially laminated (temporarily adhered with a tape) with the surface side (indoor side) of the three-layer plastic complex material a teach of the both side-end portions along the extruding direction of the resin of the plastic complex material, whereby an automobile interior headliner molding or forming member was obtained. This laminate (automobile interior headliner molding or forming member) was preheated in a heating oven and then, formed in a cooling mold. At this time, Cladding surface material 1 was stacked over the molded laminate as in Comparative Example 1. From the laminate having partially adhered and thereby reinforced portions at both sides, a laminate sample (of about 300 mm square) in a similar size to that of Comparative Example 1 was obtained.

The automobile interior headliner molding or forming member in this example has a substantially same shape as that illustrated in the perspective view of FIG. 4. The lengthwise direction is a resin extruding direction and also the front to rear direction of the automobile.

<Test Results>

Test results of the eight-layer polypropylene foam laminates (automobile interior headliner members) obtained in Examples 1 to 4 and test results of Comparative Examples 1 and 2 are shown in Table 1.

From this Table, it has been confirmed that the eight-layer polypropylene foam laminate is equipped with sufficient properties as an automobile interior headliner member. It has also been confirmed that partial reinforcement with a reinforcing material obtained by laminating a glass fiber mat with a polypropylene resin sheet brings about a further improvement in rigidity and deflection resistance at high temperatures (Example 4).

It has also be understood that the members of Examples 1 to 4 using a glass fiber sheet are markedly improved in shrinkage percentage and are therefore excellent in size stability after molding or forming compared with the automobile interior headliner members (Comparative Examples 1, 2) using a mica-containing polypropylene sheet, which members had been developed by the present company before.

[Table 1]

| | Weight per unit area (g/m²) | Thickness (mm) | Shrinkage percentage (%) 90°C 8Hr | Rigidity | | Heat-resistant cantilever gravity drawdown (mm) | Linear expansion coefficient (I/°C) |
|---|---|---|---|---|---|---|---|
| | | | | Maximum flexural load (N) | Flexural modulus gradient (N/cm) | | |
| Ex. 1 | 540 | 3.8 | -0.02 | 20 | 45 | -10 | $2 \times 10^{-5}$ |
| Ex. 2 | 545 | 3.8 | -0.02 | 21 | 45 | -10 | $2 \times 10^{-5}$ |
| Ex. 3 | 570 | 3.8 | -0.02 | 23 | 48 | -8 | $2 \times 10^{-5}$ |
| Ex. 4 | 570 | 4.0 | -0.02 | 26 | 65 | -5 | $2 \times 10^{-5}$ |
| Comp. Ex. 1 | 477 | 3.8 | -0.15 | 20 | 44 | -20 | - |
| Comp. Ex. 2 | 530 | 3.8 | -0.13 | 26 | 73 | -10 | - |

The automobile interior headliner molding or forming member and the automobile interior headliner member using it, each according to the present invention, have sufficient rigidity. Particularly, they are excellent in size stability, for example, shrinkage percentage of the molded or formed product because a glass fiber sheet is used for them. Such properties contribute to their excellent working efficiency upon attachment.

In addition, they have good moldability or formability. The seven-layer polypropylene foam laminate or eight-

**EP 1 279 490 A1**

layer polypropylene foam laminate of the invention can be produced by stacking a glass fiber sheet laminated in advance with a polypropylene resin over both sides of the foamed polypropylene sheet while extruding, in a molten state, a polypropylene resin having the same material quality with the foamed sheet, thereby laminating them, so that it can be produced with good adhesion, can deal with the conditions requiring wide width and high speed relatively easily, and is excellent in productivity. Since it is substantially symmetrical in the thickness direction with the foamed polypropylene sheet as a center, it has resistance against warpage, which will otherwise be caused by a difference in the material quality.

By partially laminating, with a strength requiring site, a reinforcing material, which has been obtained by laminating a glass fiber sheet with a polypropylene resin and cut into a proper size in advance, the rigidity can be improved. To a method which is generally known to increase the whole weight of the member in order to improve rigidity, the reinforcing method of the invention is superior in cost and weight reduction.

Having described specific preferred embodiments of the invention with reference to the accompanying drawings, it will be appreciated that the present invention is not limited to those precise embodiments, and that various changes and modifications can be effected therein by one of ordinary skill in the art without departing from the scope of the invention as defined by the appended claims.

[Legends]

1. Cladding surface material
2. Polypropylene (resin) sheet
3. Glass fiber mat (one embodiment of glass fiber sheet)
4. Foamed polypropylene sheet
5. Back treating material (polyester nonwoven fabric)
6. Glass fiber mat mixed with polyolefin resin fibers
7. Polypropylene (resin) sheet kneaded with filler
8. Polypropylene (resin) sheet for reinforcing material
9. Glass fiber mat for reinforcing material
10. Eight-layer polypropylene foam laminate
11. Eight-layer polypropylene foam laminate having a reinforced portion
12. Five-layer laminate
13. Two-layer laminate
14. T die
16. Slitter
17. Cutter
18. Automobile interior headliner molding or forming member

## Claims

1. An automobile interior headliner molding or forming member comprising a seven-layer polypropylene foam laminate formed by laminating a foamed polypropylene sheet, on both sides thereof, with a glass fiber sheet laminate having a glass fiber sheet laminated on both sides thereof with a polypropylene sheet.

2. An automobile interior headliner molding or forming member of Claim 1, wherein the foamed polypropylene sheet constituting the seven-layer polypropylene foam laminate has an expansion ratio of 5 to 50 times and a thickness of 2 to 6 mm,
    the glass fiber sheet is composed mainly of glass fibers and has a mass per unit area of 20 to 150 g/m$^2$, and
    the polypropylene sheet laminated with the glass fiber sheet on both sides thereof has a thickness of 20 to 300 μm.

3. An automobile interior headliner molding or forming member of Claim 1 or 2, wherein the glass fiber sheet contains 90 to 30 % by mass of glass fibers and 10 to 70 % by mass of olefin resin fibers such as polypropylene fibers.

4. An automobile interior headliner molding or forming member of any one of Claims 1 to 3, wherein the polypropylene sheet laminated with the glass fiber sheet on both sides thereof has a melt flow rate, as measured at a testing temperature of 230°C under a test load of 21.18N, of 3 to 40 g/10 min, and contains a filler such as mica or talc

**12**

in an amount of 5 to 10 % by mass.

5. An automobile interior headliner molding or forming member of any one of Claims 1 to 4, wherein a back treating material is adhered to the back side of the seven-layer polypropylene foam laminate.

6. An automobile interior headliner molding or forming member of Claim 5, wherein the back treating material is a nonwoven fabric composed mainly of polyester fibers.

7. An automobile interior head liner member obtained by molding or forming of an automobile interior headliner molding or forming member as claimed in any one of Claims 1 to 6.

8. Anautomobile interi or headliner member of Claim 7, wherein the seven-layer polypropylene foam laminate has a reinforced portion formed by partially laminating a glass fiber sheet, which has been laminated with a polypropylene sheet on the side of the back treating material, to the outer surface of the back treating material adhered to the back side of the polypropylene foam laminate.

9. An automobile interior headliner member of Claim 8, wherein the glass fiber sheet and polypropylene sheet laminated with the outer surface of the back treating material on the back side of the seven-layer polypropylene foam laminate have been formed of the same materials as those used for the glass fiber sheet laminate constituting the seven-layer polypropylene foam laminate.

10. An automobile interior head liner molding or forming member of any one of Claims 1 to 6, wherein an absolute shrinkage percentage of the automobile interior headliner molding or forming member, as tested by a method which will be described later, is 0.05% or less.

11. An automobile interior headliner member of any one of Claims 7 to 9, wherein an absolute shrinkage percentage of the automobile interior headliner member, as tested by a method which will be described later, is 0.05% or less.

# FIG.1

FIG.2

# FIG.3

# FIG.4

# FIG.5

**European Patent Office**

## EUROPEAN SEARCH REPORT

Application Number

EP 02 25 5264

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 876 534 A (ERHARDT GUENTER) 2 March 1999 (1999-03-02) * the whole document * | 1-11 | B32B5/22 B32B27/12 B32B27/32 B60R13/02 |
| A | EP 0 605 235 A (MITSUI TOATSU CHEMICALS) 6 July 1994 (1994-07-06) * claims 1,7,9,11,12 * | 1-11 | |
| A | US 5 716 697 A (MEEKER BRIAN L) 10 February 1998 (1998-02-10) * the whole document * | 1-11 | |
| A | US 4 543 289 A (PARK IM K) 24 September 1985 (1985-09-24) * claims * | 1-11 | |
| A | EP 0 657 281 A (GREINER & SOEHNE C A) 14 June 1995 (1995-06-14) * page 1, line 21-56 * * page 11, line 31-34; claims 1,5,9,10,13; figures 1,2 * | 1-11 | |

TECHNICAL FIELDS SEARCHED (Int.Cl.7)

B32B
B60R

The present search report has been drawn up for all claims

| Place of search | Date of completion of the search | Examiner |
|---|---|---|
| THE HAGUE | 14 November 2002 | Ibarrola Torres, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.

EP 02 25 5264

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2002

| Patent document cited in search report | | Publication date | Patent family member(s) | | Publication date |
|---|---|---|---|---|---|
| US 5876534 | A | 02-03-1999 | AT | 405382 B | 26-07-1999 |
| | | | AT | 164395 A | 15-12-1998 |
| | | | WO | 9712756 A1 | 10-04-1997 |
| | | | AT | 194942 T | 15-08-2000 |
| | | | AU | 718121 B2 | 06-04-2000 |
| | | | AU | 7120496 A | 28-04-1997 |
| | | | CA | 2206872 A1 | 10-04-1997 |
| | | | CZ | 9701695 A3 | 17-09-1997 |
| | | | DE | 59605648 D1 | 31-08-2000 |
| | | | DK | 794859 T3 | 02-10-2000 |
| | | | EP | 0794859 A1 | 17-09-1997 |
| | | | ES | 2149496 T3 | 01-11-2000 |
| | | | JP | 10510494 T | 13-10-1998 |
| | | | PT | 794859 T | 30-11-2000 |
| | | | SI | 794859 T1 | 31-10-2000 |
| | | | SK | 70397 A3 | 08-10-1997 |
| EP 0605235 | A | 06-07-1994 | DE | 69324226 D1 | 06-05-1999 |
| | | | DE | 69324226 T2 | 02-09-1999 |
| | | | EP | 0605235 A2 | 06-07-1994 |
| | | | JP | 6246723 A | 06-09-1994 |
| | | | KR | 123475 B1 | 10-11-1997 |
| | | | US | 5494737 A | 27-02-1996 |
| | | | JP | 7001636 A | 06-01-1995 |
| US 5716697 | A | 10-02-1998 | CA | 2166336 A1 | 15-08-1996 |
| US 4543289 | A | 24-09-1985 | NONE | | |
| EP 0657281 | A | 14-06-1995 | AT | 401908 B | 27-12-1996 |
| | | | AT | 241793 A | 15-05-1996 |
| | | | AT | 215015 T | 15-04-2002 |
| | | | CA | 2136773 A1 | 30-05-1995 |
| | | | CZ | 9402894 A3 | 14-06-1995 |
| | | | DE | 4442014 A1 | 01-06-1995 |
| | | | DE | 9421206 U1 | 13-07-1995 |
| | | | DE | 59410089 D1 | 02-05-2002 |
| | | | EP | 0657281 A1 | 14-06-1995 |
| | | | JP | 7232398 A | 05-09-1995 |

EPO FORM P0459

For more details about this annex : see Official Journal of the European Patent Office, No. 12/82